# NEW EUROPEAN PATENT SPECIFICATION

(11) **EP 3 818 249 B2**
(45) Date of publication and mention of the opposition decision: **04.03.2026**
(45) Mention of the grant of the patent: 06.04.2022
(21) Application number: 19736839.2
(22) Date of filing: 02.07.2019
(51) Int. Cl.: E21F 13/00, E21F 17/04, B60L 58/18

(54) **METHODS AND DEVICES FOR POWER CONTROL IN MINING MACHINES**
VERFAHREN UND VORRICHTUNGEN ZUR LEISTUNGSSTEUERUNG IN BERGBAUMASCHINEN
PROCÉDÉS ET DISPOSITIFS DE COMMANDE DE PUISSANCE DANS DES MACHINES POUR EXPLOITATION MINIÈRE

(30) Priority: 04.07.2018 SE 1850848
(43) Date of publication of application: 12.05.2021
(73) Proprietor: Epiroc Rock Drills Aktiebolag, 701 91 Örebro (SE)
(72) Inventor: BAGGE, Markus, 703 43 Örebro (SE); OLOFSSON, Magnus, 691 54 Karlskoga (SE)
(74) Representative: Valea AB
(86) International application number: PCT/SE2019/050653
(87) International publication number: WO 2020/009646

(56) References cited:
- EP-A1- 1 455 439
- EP-A1- 2 243 676
- EP-A1- 2 684 732
- EP-A2- 2 562 030
- EP-A2- 2 562 030
- EP-B1- 1 241 041
- EP-B1- 2 918 442
- WO-A1-2011/148051
- WO-A1-2014/073106
- WO-A1-2016/191686
- WO-A1-2019/088899
- WO-A2-2011/109050
- EA-A1- 201 290 728
- JP-A- 2007 191 973
- JP-B2- 5 340 627
- US-A1- 2014 032 006
- US-A1- 2016 118 828

## Description

### TECHNICAL FIELD

The present disclosure relates to methods and devices for power control in mining machines. In particular the disclosure relates to methods and devices for power control of a mining machine that comprises one or more energy sources. The disclosure also relates to corresponding computer programs and a mining machine comprising power control circuitry/arrangement.

### BACKGROUND

The day-to-day operations of mining typically involve cycles of drilling, blasting, ventilating, and loading, hauling and dumping material that has been freed in the process. The mining operations involve a wide variety of mining machines, such as face drill rigs, production drill rigs, rock bolting rigs, cable bolting rigs, concrete spraying machines, loaders, haulers and dumpers. The listed mining machines require considerable power during operation. There is currently considerable effort in switching from fuel-powered mining machines to electrically and battery powered mining machines.

The mining cycle places demands on power that are unique to mining. The mining machines often have very high power demands during predictable phases of a mining cycle. During the phases where power demand is very high, the source providing power to the mining machine(s) is stressed and there is a risk of an unwanted stop in production due to power demand overload. In particular, a loss of steering/control of a mining machine due to power failure could result in danger to mining personnel and the mining machines.

Each mining machine typically has a plurality of electric power units, each with specific electric power needs. A particular challenge is that some of the electric power units have predictable power demands, while others are affected by external forces, such as electric power demands of hydraulics, making power peaks difficult or impossible to predict. Power peaks may stress the energy source of the mining machine and cause interruptions, e.g. due to some electric power units not getting sufficient power, which may lead to a reduction in productivity and potential dangers. The stress of the high power demands may significantly impact the life expectancy of the energy source as well as the mining machine as a whole.

An additional issue concerns energy efficiency. The high power demands give rise to corresponding energy costs. Furthermore, since the power supply in the mine is often limited, it is highly desirable to be economical. For electrically and battery powered mining machines, inefficiency may cause unwanted disruption or require more charge cycles in cases where rechargeable batteries are used.

WO 2011/109050 A2 discloses an electric drive system for a vehicle, e.g., mining vehicle, controlling power distribution based on catenary line connectivity and operational priorities.

### SUMMARY

An object of the present disclosure is to provide methods and devices which seek to mitigate, alleviate, or eliminate one or more of the above-identified deficiencies in the art and disadvantages singly or in any combination and to provide methods, computer programs, control circuitry and mining machines for power control of a mining machine.

The present disclosure relates to a method for power control of a mining machine according to claim 1. The mining machine comprising one or more energy sources. The method comprises assigning priorities to electric power units of a plurality of electric power units of the mining machine, each electric power unit having an assigned priority. The method further comprises controlling electric power distribution for the plurality of electric power units based on the assigned priorities. According to some aspects, the one or more energy sources comprise at least one of a rechargeable battery, a supercapacitor, a rechargeable fuel cell and a flywheel. During a mining operational cycle, the same mining machine may face a set of tasks, each task placing different power level demands on different electric power units of the mining machine. By assigning priorities, the electric power units can be organized to solve the current task at hand given the available power. By using the assigned priority, all available power can be used for a specific electrical power unit as long as a higher prioritized electric power unit is not used. For instance, all available electric power can be used for traction - to maximize vehicle speed - as long as the higher prioritized steering, driven by an auxiliary motor, is not used. The method enables increased productivity, improved reliability, improved safety and enables prolonged life expectancy of the mining machine, in particular the rechargeable battery in case of a battery powered mining machine. The disclosed method provides a systematic way of handling the charge and discharge power levels of the battery.

According to some aspects, the step of controlling electric power distribution is further based on a maximum charge power level and a maximum discharge power level of a direct current, DC, bus of the mining machine. The DC-bus is configured to transmit and receive electric power to/from the one or more energy sources, such as a rechargeable battery, and the plurality of electric power units. A battery has limited charging and discharging power levels that may not be exceeded. By attending to the maximum charge and discharge levels of the DC-bus, the charging and discharging power levels of the battery of the battery electric mining machine are kept within the allowable range, while simultaneously enabling taking into account characteristics of different types of electric power units. The risk of downtime due to battery power overload is thereby considerably reduced.

According to some aspects, the maximum charge power levels and maximum discharge power levels are based on a desired state of charge, SoC, of the rechargeable battery. According to some aspects, the maximum charge power levels and maximum discharge power levels are based on a temperature of the rechargeable battery. The rechargeable battery will typically continuously send charge and discharge limits to the control circuitry of the mining machine as part of determining the charge and discharge limits of the plurality of electric power units of the mining machine. The discharge limits are typically based on a desired state of charge of the battery, but may be based on other parameters, such as battery temperature and/or battery temperature change, as well. The discharge limits may also be based on any combination of said, and/or other appropriate, parameters. Likewise for corresponding charge limits.

According to some aspects, the step of controlling power distribution is further based on respective maximum charge power levels and respective maximum discharge power levels of the plurality of electric power units of the mining machine. The electrical power units will typically interact together with the one or more energy sources, such as a battery, in order to determine possible charge and discharge power levels for the electric power units. It is not only the one or more energy sources that determines how much electric power an electric power unit may discharge; other energy power units may also affect the decision. Charge and discharge limits can thereby be separated but coordinated with each other.

According to some aspects, the maximum charge power level and maximum discharge power level of an electrical power unit is based on a remaining DC-bus charge power and/or a remaining DC-bus discharge power, and further based on a predetermined power margin. Auxiliary electric power units, such as an auxiliary motor, may thereby assign the power limits of the electrical power unit in question based on the remaining DC-bus (dis)charge power and a power margin. This guarantees that certain power limits are not exceeded by more than said power margin.

According to some aspects, the step of controlling power distribution is further based on a voltage level of a DC-bus of the mining machine, wherein the DC-bus is configured to transmit and receive electric power to/from the rechargeable battery and the plurality of electric power units. Different power units may then adjust their power levels based on different voltage levels. This may be particularly suitable when a DC-bus of the mining machine is supplied via e.g. an alternating current, AC, direct current, DC, converter having a constant nominal voltage level.

According to some aspects, the assigned priorities are separated into priorities for charging electric power units and priorities for discharging electric power units. By assigning different priorities for charging and discharging electric power units the risk for dangerous stops, e.g. due to loss of control of the mining machine, can be significantly reduced. For instance, critical 24 V peripheral power systems, which typically require relatively low power levels, can be ensured to always have sufficient power.

According to some aspects, a set of electric power units are grouped together in a functional unit and assigned a single priority for the functional unit. According to some aspects, the functional unit of electric power units comprises a charger, a brake chopper and a retarder. In practice, certain electric power units, e.g. an onboard charger and a brake chopper/retarder, will never be activated simultaneously. Therefore, physical units dedicated to charging or discharging, such as (onboard) chargers, brake choppers and retarders, can be treated as a single functional unit.

According to some aspects, the step of controlling power distribution is further based on measured power produced and consumed in each electric power unit.

According to the invention, the step of controlling power distribution further comprises determining power estimation errors for at least one of the plurality of electric power units based on electric power distribution feedback from one or more energy sources of the mining machine. The step of controlling power distribution further comprises adjusting a charging and/or a discharging power level of the at least one of the plurality of electric power units based on the determined power estimation errors. By determining a power correction term based on what is actually measured by the battery, downstream errors in determination of charge and discharge limits of the electric power units may be compensated.

The present disclosure further relates to a computer program for power control of a mining machine, the computer program comprising computer program code which, when executed, causes control circuitry of a mining machine to carry out the method for power control of a mining machine, as described above and below.

The present disclosure also relates to control circuitry for power control of a mining machine. The control circuitry is configured to assign priorities to electric power units of a plurality of electric power units of the mining machine. Each electric power unit has an assigned priority. The control circuitry is further configured to control power distribution for the plurality of electric power units based on the assigned priorities.

According to some aspects, the control circuitry further comprises a processor and a memory. The memory has a computer program for power control of a mining machine, as described above and below, stored thereon. The processor is configured to execute the computer program.

The present disclosure further relates to a mining machine for power control of a mining machine. The mining machine comprises one or more energy sources, a plurality of electric power units and control circuitry. The mining machine is configured to transmit and receive electric power to/from the one or more energy sources and the plurality of electric power units. The control circuitry is configured to assign priorities to electric power units of a plurality of electric power units of the mining machine, each electric power unit having an assigned priority. The control circuit is further configured to control power distribution for the plurality of electric power units based on the assigned priorities. According to some aspects, the one or more energy sources comprises at least one of a rechargeable battery, a supercapacitor, a rechargeable fuel cell and a flywheel. According to some aspects, the mining machine also comprises a DC-bus. The DC-bus is configured to transmit and receive electric power to/from the one or more energy sources and the plurality of electric power units.

The disclosed computer programs, control circuitry and mining machines implement the disclosed method and therefore have all the associated technical effects and advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 is a flowchart illustrating a method for power control of a mining machine;
Figure 2 schematically illustrates control circuitry for power control of a mining machine;
Figure 3 schematically illustrates a mining machine according to the present disclosure;
Figure 4 schematically illustrates power control of priorities for charging electric power units; and
Figure 5 schematically illustrates power control of priorities for discharging electric power units.

### DETAILED DESCRIPTION

Aspects of the present disclosure will be described more fully hereinafter with reference to the accompanying drawings. The devices and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

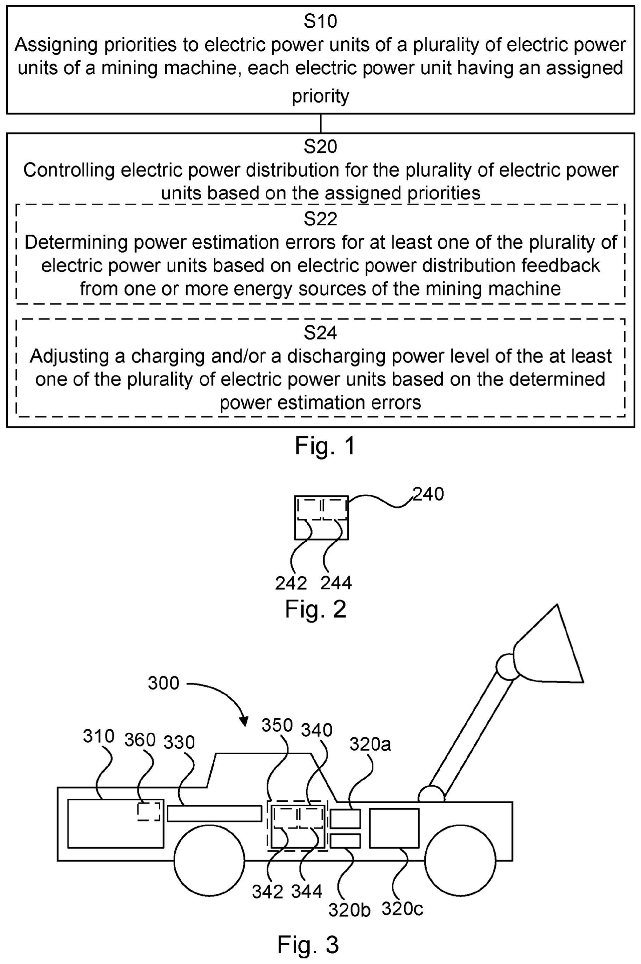

Figure 1 is a flowchart illustrating a method for power control of a mining machine. By turning to figure 3, a schematic illustration of a mining machine 300 in which the disclosed method is performed can be seen. The mining machine 300 comprises one or more energy sources 310, which is electrically connected to a set of electric power units 320a-c. The one or more energy sources are typically connected to the electric power units via a direct current, DC, bus 330. The mining machine 300 further comprises control circuitry 340 configured to carry out the disclosed method. The control circuitry may comprise a computer program configured to carry out the disclosed method when executed. While the DC-bus 330 is discussed as a separate unit, it may be comprised in the control circuitry. Returning to Fig. 1, the method enables systematic prioritization among an arbitrary number of electric power units connected to one or more energy sources, herein illustrated by a rechargeable battery. However, the one or more energy sources are not limited to rechargeable batteries only; the one or more energy sources may comprise one or more of a rechargeable battery, a supercapacitor, a rechargeable fuel cell and a flywheel. The one or more energy sources may be of the same type, e.g. only rechargeable batteries, or of different types. In other words, the one or more energy sources may comprise at least two different types of energy sources. These rechargeable energy sources enable sufficient energy storage with respect to weight and operational demands, while also being able to provide the necessary power output during discharge.

The method is a method for power control of a mining machine. The mining machine comprises one or more energy sources. One purpose of the disclosed method is to stay within the charging and discharging limits of the one or more energy sources and thereby avoid downtime.

The method comprises assigning S10 priorities to electric power units of a plurality of electric power units of the mining machine, each electric power unit having an assigned priority. The method further comprises controlling S20 electric power distribution for the plurality of electric power units based on the assigned priorities. In a mining machine, the battery typically supplies electric power via a DC-bus to electric power units of the mining machine. The starting point is then to determine how much the DC-bus is allowed to be charged and discharged.

Thus, according to some aspects, the step of controlling S20 electric power distribution is further based on a maximum charge power level and a maximum discharge power level of a DC-bus of the mining machine. The DC-bus is configured to transmit and receive electric power to/from the one or more energy sources, here illustrated by a rechargeable battery, and the plurality of electric power units.

A particular strength of the disclosed method is that it enables providing each electric power unit with individual charge and discharge priorities. In other words, according to some aspects the assigned priorities are separated into priorities for charging electric power units and priorities for discharging electric power units. The separation into charge and discharge priorities is particularly effective at ensuring that critical electrical power units always have power, which reduces the risk of dangerous interruptions or stops, e.g. due to loss of control of the mining machine.

How much the DC-bus is allowed to be charged and discharged does not depend on the charge and discharge limits of the rechargeable battery alone, but also the contributions of the respective electrical power units. For instance, an electrical power unit discharging the DC-bus raises the charge capacity of the DC-bus, but not the charge capacity of the battery. Thus, according to some aspects, the step of controlling S20 electric power distribution is further based on respective maximum charge power levels and respective maximum discharge power levels of the plurality of electric power units of the mining machine.

On the basis of these charge and discharge limits, the electric power of the electric power units will be limited according to an assigned priority of the electric power units by subtracting the current or expected electric power of the electric power units. The electric power unit having the lowest priority will have its electric power reduced first.

An important factor in maintaining maximum efficiency of mining operations is to ensure that there are as few interruptions as possible. One potential source of interruptions is a gradual reduction of battery lifetime. Another potential source of interruption is blown fuses due to electric overload. Two important factors having an impact on battery lifetime are state of charge of the battery and temperature of the battery. Completely draining or completely charging the battery would typically shorten the battery lifetime considerably. Therefore, only a part of the total energy of the battery is preferably used during operation of the mining machine. Likewise, too high temperatures or rapid temperature changes may have detrimental effects on battery lifetime. Thus, according to some aspects, the maximum charge power levels and maximum discharge power levels are based on a desired state of charge, SoC, of the rechargeable battery. According to some aspects, the maximum charge power levels and maximum discharge power levels are based on a temperature of the rechargeable battery.

Certain electric power units may have antagonistic relationships when it comes to charging and discharging. For instance, according to some aspects, the set of electric power units comprises a charger, a brake chopper and a retarder. It does not makes sense to use an onboard charger at the same time as a brake chopper or a retarder. These electric power units may therefore be grouped into a single functional unit, even though they are physically separate units. Thus, according to some aspects, a set of electric power units are grouped together in a functional unit and assigned a single priority for the functional unit.

With the battery and the electric power units connected to a common DC-bus, the maximum charge/discharge power level of the DC-bus will determine the available power for the highest priority electrical power unit (or units if having separate priorities for charging and discharging), and implicitly the available power for the electrical power units of lower priority(-ies). The maximum charge/discharge power level of the DC-bus does not depend only on the battery, however, but also on the electric power units. Specifically, the DC-bus charge/discharge limit will be determined by a difference between the battery power charge/discharge limit and the demands of the electrical power units. In other words, according to some aspects, the step of controlling S20 electric power distribution is further based on measured power produced and consumed in each electric power unit. By introducing a power charge/discharge power margin as a virtual electrical power unit, a robustness can be added to the electric power control method.

The control of the electric power distribution may be performed sequentially, wherein the electric power unit having the highest priority gets its demand met first, before any power is provided to electric power units assigned lower priorities. However, since the maximum charge/discharge power level of the DC-bus may include measurement errors, determining downstream maximum charge/discharge power levels of the electric power units may be adversely affected. By introducing a virtual electric power unit in the form of a correction, it is possible to adjust power according to what is actually measured by the battery. Therefore, according to the invention, the step of controlling S20 electric power distribution further comprises determining S22 power estimation errors for at least one of the plurality of electric power units based on electric power distribution feedback from the one or more energy sources. The step of controlling power distribution further comprises adjusting S24 a charging and/or a discharging power level of the at least one of the plurality of electric power units based on the determined power estimation errors.

According to some aspects, the charge and discharge power limits of plurality of electric power units are continuously updated. According to some aspects, the charge and discharge power limits are updated at a predetermined frequency. Likewise, the charge and discharge electric power limits of the DC-bus may be continuously updated, e.g. at a predetermined frequency. The electric power charge and discharge limits of the DC-bus as well as the individual electric power charge and discharge limits of the plurality of electric power units may be based on continuous updates, e.g. at a predetermined frequency, of the electric power charge and discharge demands of the plurality of electric power units. In other words, the electric power charge and discharge demands may be used in a feedback loop in order to continuously update the electric power charge and discharge limits of the DC-bus and/or the plurality of electric power units.

If the DC-bus of the mining machine is supplied via e.g. an alternating current, AC, to DC converter having a constant nominal voltage level, it may be possible to adjust the power level of the electric power units based on a voltage level of the DC-bus. Thus, according to some aspects, the step of controlling S20 electric power distribution is further based on a voltage level of a DC-bus of the mining machine, wherein the DC-bus is configured to transmit and receive electric power to/from at least one of a rechargeable battery, a supercapacitor, a rechargeable fuel cell and a flywheel of the mining machine and the plurality of electric power units.

For auxiliary electric power units, such as a speed controlled auxiliary motor, an alternative or complementary aspects exists, which is based on assigning the respective charge/discharge power limits of the auxiliary electric power unit based on a remaining DC-bus charge/discharge plus a margin. This has an advantage in that it guarantees that the electric power limits of the battery are not exceeded by more than said margin. Thus, according to some aspects, the maximum charge power level and maximum discharge power level of an electrical power unit is based on a remaining DC-bus charge power and/or a remaining DC-bus discharge power, and further based on a predetermined power margin.

The present disclosure further relates to a computer program for power control of a mining machine, the computer program comprising computer program code which, when executed, causes control circuitry of a mining machine to carry out the method for power control of a mining machine, as described above and below.

Figure 2 illustrates control circuitry 240 for power control of a mining machine. The control circuitry 240 is configured to assign priorities to electric power units of a plurality of electric power units of the mining machine, each electric power unit having an assigned priority. The control circuitry is further configured to control power distribution for the plurality of electric power units based on the assigned priorities. According to some aspects, the control circuitry 240 further comprises a processor 242 and a memory 244. The memory 244 has a computer program as described above and below stored thereon. The processor 242 is configured to execute the computer program. The control circuitry may additionally comprise a DC-bus. The DC-bus is configured to transmit and receive electric power to/from one or more energy sources of the mining machine, such as a rechargeable battery, and the plurality of electric power units. The operation of mining machines may be performed either from the mining machine itself or via remote control. The operational control of the mining machine is typically performed by a machine control unit, which may be comprised in the mining machine or be located external to the mining machine, e.g. as part of a central control system. Specifically, the machine control unit is configured to control one or more electrical systems and/or subsystems of the mining machine. The machine control unit may be an embedded system. The control circuitry may be part of such a machine control unit. The control circuitry implements the disclosed method and thus has all the associated technical effects and advantages.

Figure 3 illustrates a mining machine according to the present disclosure. The mining machine 300 comprises one or more energy sources 310. According to some aspects, the one or more energy sources 310 comprise a rechargeable battery. According to some further aspects, the mining machine further comprises one or more battery management systems, BMS, 360 configured to provide battery data to control circuitry 340 of the mining machine. The battery data may comprise an operational status of the battery, such as a charge level or a temperature of the battery.

However, the one or more energy sources are not limited to batteries only; the one or more energy sources may be one of a rechargeable battery, a supercapacitor, a rechargeable fuel cell and a flywheel, or any combination thereof. According to some aspects, the mining machine has a hybrid energy supply, i.e. the mining machine comprises at least two different types of energy sources. The mining machine may comprise a diesel powered energy source and a rechargeable battery. The diesel powered energy source may further be configured to charge the rechargeable battery. Just like the mining machine may comprise one or more battery management systems for monitoring the operational status of the batteries and provide the control circuitry with battery data, the mining machine may comprise corresponding energy source management systems for supercapacitors, rechargeable fuel cells, flywheels and hybrid energy sources. Just like the BMS is configured to provide battery data, the energy source management systems will be configured to provide the control circuitry with data relevant for the respective energy source, e.g. kinetic energy of a flywheel.

The mining machine further comprises a plurality of electric power units 320a, 320b, 320c. The mining machine is configured to transmit and receive electric power to/from the one or more energy sources and the plurality of electric power units. According to some aspects, the mining machine also comprises a DC-bus 330. The DC-bus is configured to transmit and receive electric power to/from the one or more energy sources and the plurality of electric power units.

The mining machine additionally comprises control circuitry 340. The control circuitry is configured to assign priorities to electric power units of a plurality of electric power units of the mining machine. Each electric power unit has an assigned priority. The control circuitry is further configured to control power distribution for the plurality of electric power units based on the assigned priorities. The operation of mining machines may be performed either from the mining machine itself or via remote control. The operational control of the mining machine is typically performed by a machine control unit 350, which may be comprised in the mining machine or be located external to the mining machine, e.g. as part of a central control system. The control circuitry 340 may be part of such a machine control unit 350. The mining machine implements the disclosed method and thus has all the associated technical effects and advantages.

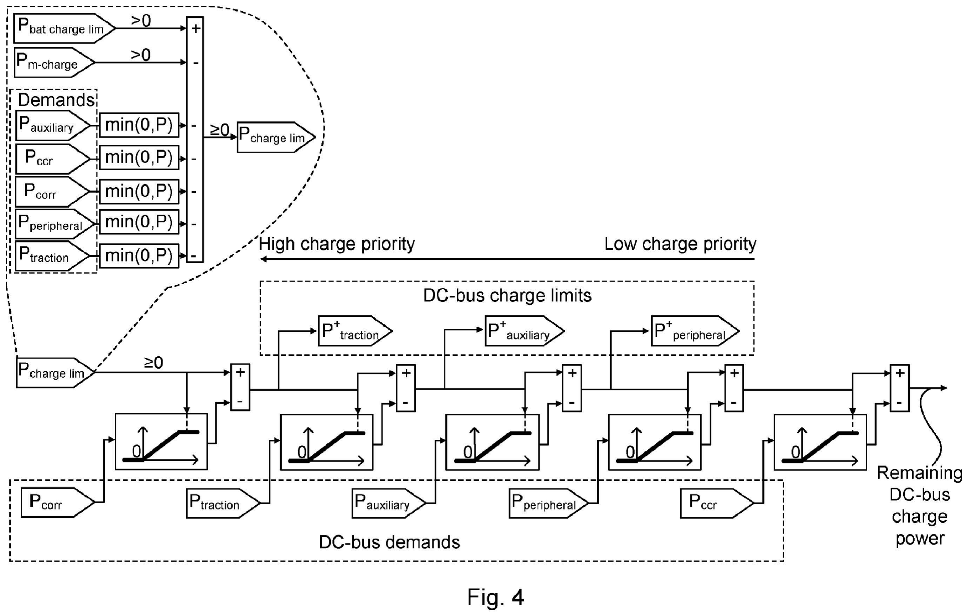

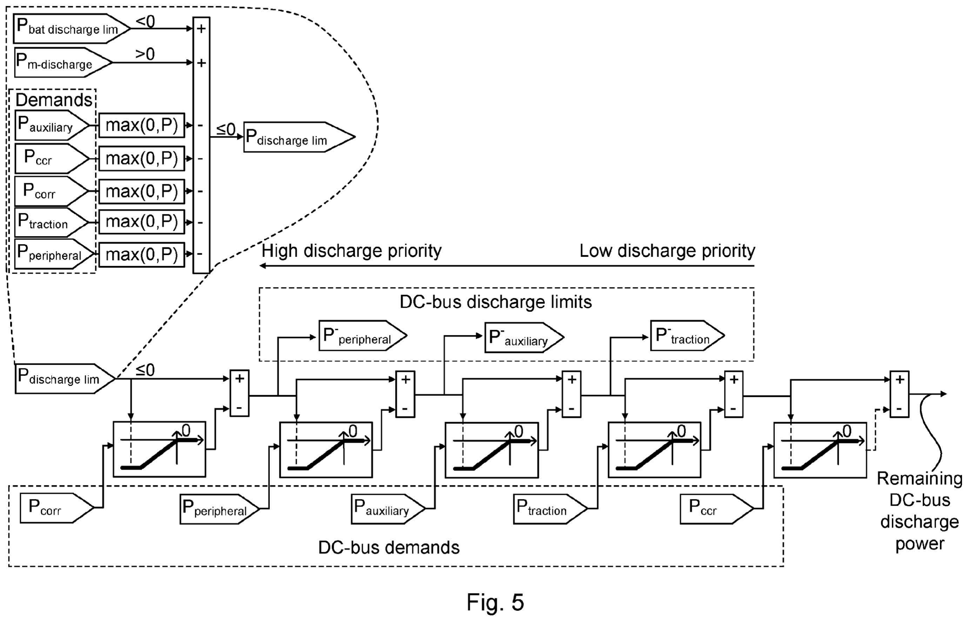

Figures 4 and 5 illustrate how different components may interact within the disclosed method.

The technical features of Figs. 4 and 5 may thus be combined freely, i.e. singly or in combination unless stated otherwise, with each other as well as those disclosed in relation to Figs. 1-3 above As discussed above, some aspects of the method comprises separating the assigned priorities into priorities for charging electric power units and priorities for discharging electric power units; for clarity, this is the case illustrated in Figs. 4 and 5. By separating the assigned priorities in this way, different priorities can be assigned depending on whether power flows in or out of the one or more energy sources.

Figure 4 illustrates power control of priorities for charging electric power units. In this example, electric power units of a mining machine interact with one or more energy sources of the mining machine, herein exemplified as a rechargeable battery, via a DC-bus. The DC-bus is configured to transmit and receive electric power to/from the rechargeable battery and the plurality of electric power units. The electric power is controlled by control circuitry for power control of the mining machine. The control circuitry is configured to assign S10 priorities to electric power units of the plurality of electric power units of the mining machine. Each electric power unit has an assigned priority. The control circuitry is further configured to control S20 electric power distribution for the plurality of electric power units based on the assigned priorities.

The plurality of electric power units of the mining machine are here exemplified by a traction electric power unit, P_{traction}, an auxiliary electric power unit, P_{auxiliary}, a peripheral electric power unit, Pₚₑᵣᵢₚₕₑᵣₐₗ, and a charger, brake chopper and (hydraulic) retarder electrical power unit, P_{ccr}. The auxiliary electric power unit relates to the electric motor(s) driving the hydraulic system of the mining machine. In the case of a hybrid powered mining machine, a second engine, such as a diesel engine, may be used as a charging electrical power unit. The peripheral electric power unit typically includes a 24 Volt system. The 24 Volt system is generally a low power system, but critical for control of the mining machine. According to some aspects, a set of electric power units are grouped together in a functional unit and assigned a single priority for the functional unit. For instance, although the charger, brake chopper and (hydraulic) retarder are physically different units, they represent a single functional unit, which may add or subtract power within limits given by P⁺_{ccr} (see Fig. 4) and P⁻_{ccr} (see Fig. 5). Charge power limits are denoted by a plus sign (see Fig. 4), since charge powers are defined as positive in this example, and discharge power limits are denoted by a minus sign (see Fig. 5) since discharge powers are defined as negative in this example.

A virtual electric power unit, P_{corr}, is also introduced. The virtual electric power unit P_{corr} is a correction term related to the difference between measured and requested battery power. In practice determination is more complicated than just determining said difference, e.g. because different units have different response times. In other words, the correction term may depend on the response times of the (other) electric power units. The correction term P_{corr} is used to adjust power according to what is actually measured by the battery. In this example, a positive value indicates excessive DC-bus charge power. This will be subtracted from the amount of DC-bus charge power available to any other unit in the DC-bus. A negative value indicates excessive DC-bus discharge power. This will be subtracted from the amount of DC-bus discharge power available to any other unit in the DC-bus. The correction term P_{corr} ensures that bad assumptions made by the control circuitry about power demands are accounted for. In other words, the step of controlling S20 electric power distribution may comprise determining S22 power estimation errors for at least one of the plurality of electric power units based on electric power distribution feedback from the one or more energy sources. The step of controlling S20 electric power distribution may thus also comprise adjusting S24 a charging and/or a discharging power level of the at least one of the plurality of electric power units based on the determined power estimation errors.

The control circuitry is preferably configured to obtain information about power usage for each electric power unit connected to the DC-bus. The control circuitry may also be configured to obtain information enabling the control circuitry to determine the amount of power the battery can currently handle. This enables the control circuitry to perform the task of controlling the allowed power out and into the electric power units in a prioritized order to stay within limits given by the battery.

The control circuitry may optionally be configured to determine a battery energy level, such as state of charge, SoC. Completely draining or completely charging the battery would typically shorten the battery lifetime considerably. Therefore, only a part of the total energy of the battery is preferably used during operation of the mining machine. Thus, according to some aspects, the maximum charge power levels and maximum discharge power levels are based on a desired state of charge, SoC, of the rechargeable battery. Likewise, charging and discharging the battery may cause temperature variations and/or temperature levels that can have a negative impact on the battery lifetime. Therefore, according to some aspects, the maximum charge power levels and maximum discharge power levels are based on a temperature of the rechargeable battery. The battery may continuously transmit charge and discharge power limits (of the battery) to the control circuitry based on the SoC and/or the temperature. Each battery will typically have a BMS configured to monitor a respective battery of a set of batteries, and set appropriate charge and discharge power limits for the batteries it is set to monitor. In the present disclosure, a battery management system, BMS, is configured to monitor an operational status of the battery, e.g., a charge level or a temperature of the battery. According to aspects of the disclosure, the BMS may also be configured to control the operational status of a battery so that that the battery is protected from charging beyond a predetermined maximum charge level or depletion below a minimum charge level. Such control may also apply to an internal temperature of the battery, whereby the BMS may interrupt power supply from a battery when the internal temperature rises above or below predetermined temperature limits. In the most general context of the present disclosure, each BMS is configured to provide the battery data to control circuitry of the mining machine configured to carry out the disclosed method.

The amount of power to any electric power unit available to charge the DC-bus depends on the maximum available DC-bus charge power, P_{charge lim}, indicating the DC-bus charge limit, and the demands of electric power units with higher priority. In other words, from a method perspective, the step of controlling S20 electric power distribution is further based on a maximum charge power level (Fig. 4) (and a maximum discharge power level - see Fig. 5 below) of the DC-bus of the mining machine. Electric power units adding power to the DC-bus will get their demands fulfilled in a prioritized order. The amount of power available to them, here exemplified with a positive figure, may thus be determined based on a battery charge power limit and power demands of electric power units of the mining machine. An estimation of the DC-bus charge power limit is illustrated in the inset of Fig. 4 and elaborated further below. In order to estimate the DC-bus charge power limit, the power of all units drawing power from the DC-bus are subtracted from the battery charge limit, P_{bat charge limit}.

Optionally, a power charge margin, P_{m-charge}, is included as well. In other words, the maximum charge power level (Fig. 4) and maximum discharge power level (see Fig. 5 for discharge) of an electrical power unit, further illustrated below, is based on a remaining DC-bus charge power and/or a remaining DC-bus discharge power, and further based on a predetermined power margin.

With the DC-bus charge power limit estimated, power demands are subtracted from the max available DC-bus charge power based on the assigned priorities, here in sequential order.

In the illustrated example, the correction term P_{corr} is used to adjust power according to what is actually measured by the battery by determining a power limit for traction, P⁺_{traction}. Once the traction electric power unit P_{traction} has been subtracted, a power limit, P⁺_{auxiliary}, is determined for the electric power unit having the next highest priority, here the auxiliary electric power unit, P_{auxiliary}. Likewise for the peripheral electrical power unit, Pₚₑᵣᵢₚₕₑᵣₐₗ. In other words, according to some aspects, the step of controlling S20 electric power distribution is further based on measured power produced and consumed in each electric power unit. In practice though, since Pₚₑᵣᵢₚₕₑᵣₐₗ is less than zero given the present convention, the control circuitry will only need to calculate P⁺_{traction} and P⁺_{auxiliary} (unless there are additional charging units of lower priority on the DC-bus). In other words, the step of controlling S20 electric power distribution is further based on respective maximum charge power levels (Fig. 4) (and respective maximum discharge power levels-see Fig. 5) of the plurality of electric power units of the mining machine.

An alternative or complementary aspect of controlling the power distribution comprises looking at a voltage level of the DC-bus. If the voltage level increases, the electric power increases as well. For instance, if an open circuit voltage, OCV, can be determined, and an inner resistance can be estimated, a change in the voltage level can be estimated based on a measured current. Thus, according to some aspects, the step of controlling S20 electric power distribution is further based on a voltage level of a DC-bus of the mining machine.

Figure 5, which is to be read in concert with Fig. 4 above, illustrates power control of priorities for discharging electric power units. Figure 5 is largely a (discharge) mirror image of Fig. 4, with the main difference being that the assigned priorities differ, as well as differences in (discharge) power limits for the electric power units.

The (onboard) charger, brake chopper and retarder may be used to add or subtract power to the DC-bus. Consequently, the charger will not be simultaneously used with the brake chopper and/or retarder. The coordination of the charger, brake chopper and retarder into a single functional unit may be performed as follows. First, the margin to the battery charge limit is calculated for all units other than charger, brake chopper and retarder. Electric power less than the battery charge limit may be charged by the charger. Electric power exceeding the battery charge limit should be discharged by the use of the brake chopper and possibly the retarder. In case brake chopper discharge power is not enough, the retarder will be used.

The resulting system illustrated in Figs. 4 and 5 can add an arbitrary number of chargers and/or dischargers. It should be noted that when the electric power is charged/discharged via the DC-bus, it is not only the charge/discharge capacity of the battery which determines how much an electrical power unit is allowed to receive; other electrical power units also influence the available power. The disclosed method has the advantage of avoiding assigning fixed power levels to each of the electric power units, which would not enable maximal utilization of the battery. The electric power control of the disclosed method can thus act both proactively by directly controlling the power, and reactively by estimating how much electric power is left to provide and provide feedback relating to the remaining available power to the control circuitry. The use of priorities in the manner described further provides a flexibility in that the priorities may also be assigned based on the task at hand. According to some aspects, the system implementing the disclosed method, i.e. the disclosed control circuitry and the disclosed mining machine, may be configured to be able to operate with different priority configurations. An example of different priority configurations includes a high performance priority configuration. The high performance priority configuration may be configured to enable high peak electric power discharge from the battery at the expense of expected battery life time. Another example of different priority configurations includes a battery friendly priority configuration. The battery friendly priority configuration may be configured to weigh expected battery life time against electric power discharge need. For instance, the battery friendly priority configuration may be configured to maintain a state of charge of a battery within a desired predetermined range.

Referring to Figs. 4 and 5, the charge and discharge power limits of plurality of electric power units may be continuously updated. According to some aspects, the charge and discharge power limits are updated at a predetermined frequency. Likewise, the charge and discharge electric power limits of the DC-bus may be continuously updated, e.g. at a predetermined frequency. The electric power charge and discharge limits of the DC-bus as well as the individual electric power charge and discharge limits of the plurality of electric power units may be based on continuous updates, e.g. at a predetermined frequency, of the electric power charge and discharge demands of the plurality of electric power units. In other words, the electric power charge and discharge demands may be used in a feedback loop in order to continuously update the electric power charge and discharge limits of the DC-bus and/or the plurality of electric power units.

Technical features of the illustrated examples of Figures 1-5 may be combined freely, i.e. taken singly or in any combination from one illustrated aspect and combined in another aspect, unless indicated otherwise.

## Claims

1. Method for power control of a mining machine, the method comprising assigning (S10) priorities to electric power units of a plurality of electric power units of the mining machine, each electric power unit having an assigned priority; and
- controlling (S20) electric power distribution for the plurality of electric power units based on the assigned priorities;
**characterized in,**
**that** the assigned priorities are separated into priorities for charging electric power units and priorities for discharging electric power units; and
**that** the step of controlling (S20) electric power distribution is further based on a maximum charge power level and a maximum discharge power level of a direct current, DC, bus of the mining machine, wherein the DC-bus is configured to transmit and receive electric power to/from one or more energy sources of the mining machine and the plurality of electric power units, wherein the step of controlling (S20) electric power distribution further comprises
- determining (S22) power estimation errors for at least one of the plurality of electric power units based on electric power distribution feedback from one or more energy sources of the mining machine, and
- adjusting (S24) a charging and/or a discharging power level of the at least one of the plurality of electric power units based on the determined power estimation errors.

2. The method according to claim 1, wherein one or more energy sources of the mining machine comprise at least one of a rechargeable battery, a supercapacitor, a rechargeable fuel cell and a flywheel.

3. The method according to any of the preceding claims, wherein the step of controlling (S20) electric power distribution is further based on respective maximum charge power levels and respective maximum discharge power levels of the plurality of electric power units of the mining machine.

4. The method according to any of the preceding claims, wherein the maximum charge power level and maximum discharge power level of an electrical power unit is based on a remaining DC-bus charge power and/or a remaining DC-bus discharge power, and further based on a predetermined power margin.

5. The method according to any of the preceding claims, wherein the step of controlling (S20) electric power distribution is further based on a voltage level of a direct current, DC, bus of the mining machine,
wherein the DC-bus is configured to transmit and receive electric power to/from at least one of a rechargeable battery, a supercapacitor, a rechargeable fuel cell and a flywheel of the mining machine and the plurality of electric power units.

6. The method according to any of the preceding claims, wherein a set of electric power units are grouped together in a functional unit and assigned a single priority for the functional unit.

7. The method according to claim 6, wherein the functional unit of electric power units comprises a charger, a brake chopper and a retarder.

8. The method according to any of the preceding claims, wherein the step of controlling (S20) electric power distribution is further based on measured power produced and consumed in each electric power unit.

9. The method according to any of the preceding claims, wherein electric power charge and discharge demands of the plurality of electric power units are used in a feedback loop in order to continuously update electric power charge and discharge limits of a direct current, DC, bus of the mining machine and/or the plurality of electric power units.

10. A computer program for power control of a mining machine, the computer program comprising computer program code which, when executed, causes control circuitry of a mining machine to carry out the method according to any of claim 1-9.

11. Control circuitry (240, 340) for power control of a mining machine, wherein the control circuitry is configured to
- assign priorities to electric power units of a plurality of electric power units of the mining machine, each electric power unit having an assigned priority; and
- control electric power distribution for the plurality of electric power units based on the assigned priorities,
**characterized in,**
**that** the assigned priorities are separated into priorities for charging electric power units and priorities for discharging electric power units, and
**that** the control of electric power distribution is further based on a maximum charge power level and a maximum discharge power level of a direct current, DC, bus of the mining machine, wherein the DC-bus is configured to transmit and receive electric power to/from one or more energy sources of the mining machine and the plurality of electric power units, wherein the control of electric power distribution comprises
- determination of power estimation errors for at least one of the plurality of electric power units based on electric power distribution feedback from one or more energy sources of the mining machine, and
- adjustment of a charging and/or a discharging power level of the at least one of the plurality of electric power units based on the determined power estimation errors.

12. Control circuitry (240, 340) according to claim 11, further comprising a processor (242, 342) and a memory (244, 344), wherein the memory has a computer program according to claim 10 stored thereon, and wherein the processor is configured to execute the computer program.

13. Mining machine (300) comprising
- one or more energy sources (310),
- a plurality of electric power units (320a, 320b, 320c), and
- control circuitry (340) according to claim 11,
wherein the mining machine is configured to transmit and receive electric power to/from the one or more energy sources and the plurality of electric power units.

14. The mining machine according to claim 13, further comprising a machine control unit (350) configured to control one or more electrical systems and/or subsystems of the mining machine, including the control circuitry (340).

## Patentansprüche

1. Verfahren zur Leistungssteuerung einer Bergbaumaschine, umfassend:
- Zuweisen (S10) von Prioritäten an elektrische Leistungseinheiten einer Vielzahl von elektrischen Leistungseinheiten der Bergbaumaschine, wobei jede elektrische Leistungseinheit eine zugewiesene Priorität aufweist; und
- Steuern (S20) der Verteilung elektrischer Leistung für die Vielzahl von elektrischen Leistungseinheiten basierend auf den zugewiesenen Prioritäten;
**dadurch gekennzeichnet,**
**dass** die zugewiesenen Prioritäten in Prioritäten zum Laden der elektrischen Leistungseinheiten und Prioritäten zum Entladen der elektrischen Leistungseinheiten unterteilt sind; und
**dass** der Schritt des Steuerns (S20) der Verteilung elektrischer Leistung ferner auf einem maximalen Ladeleistungspegel und einem maximalen Entladeleistungspegel einer Gleichstrom- (DC-) Sammelschiene der Bergbaumaschine basiert, wobei die DC-Sammelschiene so konfiguriert ist, dass sie elektrische Leistung an eine oder mehrere Energiequellen der Bergbaumaschine und die Vielzahl der elektrischen Leistungseinheiten überträgt und von diesen empfängt, wobei der Schritt des Steuerns (S20) der Verteilung elektrischer Leistung ferner Folgendes umfasst:
- Bestimmen (S22) von Leistungsschätzungsfehlern für mindestens eine der Vielzahl von elektrischen Leistungseinheiten basierend auf der Rückkopplung der Verteilung elektrischer Leistung von einer oder mehreren Energiequellen der Bergbaumaschine, und
- Anpassen (S24) eines Lade- und/oder Entladeleistungspegels der mindestens einen der Vielzahl von elektrischen Leistungseinheiten basierend auf den bestimmen Leistungsschätzungsfehlern.

2. Verfahren nach Anspruch 1, wobei eine oder mehrere Energiequellen der Bergbaumaschine mindestens eines der Folgenden umfassen: wiederaufladbare Batterie, Superkondensator, wiederaufladbare Brennstoffzelle und Schwungrad.

3. Verfahren nach einem der vorhergehenden Ansprüche, wobei der Schritt des Steuerns (S20) der Verteilung elektrischer Leistung ferner auf den jeweiligen maximalen Ladeleistungspegeln und den jeweiligen maximalen Entladeleistungspegeln der Vielzahl von elektrischen Leistungseinheiten der Bergbaumaschine basiert.

4. Verfahren nach einem der vorhergehenden Ansprüche, wobei der maximale Ladeleistungspegel und der maximale Entladeleistungpegel einer elektrischen Leistungseinheit auf einer verbleibenden Ladeleistung der DC-Sammelschiene und/oder einer verbleibenden Entladeleistung der DC-Sammelschiene und ferner auf einer vorbestimmten Leistungsgrenze basiert.

5. Verfahren nach einem der vorhergehenden Ansprüche, wobei der Schritt des Steuerns (S20) der Verteilung elektrischer Leistung ferner auf einem Spannungspegel einer Gleichstrom- (DC-) Sammelschiene der Bergbaumaschine basiert,
wobei die DC-Sammelschiene so konfiguriert ist, dass sie elektrische Leistung an mindestens eines von wiederaufladbarer Batterie, Superkondensator, wiederaufladbarer Brennstoffzelle und Schwungrad der Bergbaumaschine und die Vielzahl von elektrischen Leistungseinheiten überträgt und von diesen empfängt.

6. Verfahren nach einem der vorhergehenden Ansprüche, wobei eine Gruppe von elektrischen Leistungseinheiten zu einer Funktionseinheit zusammengefasst und der Funktionseinheit eine einzige Priorität zugewiesen wird.

7. Verfahren nach Anspruch 6, wobei die Funktionseinheit von elektrischen Leistungseinheiten ein Ladegerät, einen Brems-Chopper und einen Verzögerer umfasst.

8. Verfahren nach einem der vorhergehenden Ansprüche, wobei der Schritt des Steuerns (S20) der Verteilung der elektrischen Leistung ferner auf der gemessenen Leistung basiert, die in jeder elektrischen Leistungseinheit produziert und verbraucht wird.

9. Verfahren nach einem der vorhergehenden Ansprüche, wobei die elektrischen Leistungslade- und
- entladeforderungen der Vielzahl von elektrischen Leistungseinheiten in einer Rückkopplungsschleife verwendet werden, um die elektrischen Leistungslade- und
- entladegrenzen einer Gleichstrom- (DC-) Sammelschiene der Bergbaumschine und/oder der Vielzahl von elektrischen Leistungseinheiten kontinuierlich zu aktualisieren.

10. Computerprogramm zur Leistungssteuerung einer Bergbaumaschine, wobei das Computerprogramm einen Computerprogrammcode umfasst, der bei Ausführung bewirkt, dass die Steuerschaltung einer Bergbaumaschine das Verfahren nach einem der Ansprüche 1 bis 9 ausführt.

11. Steuerschaltung (240, 340) zur Leistungssteuerung einer Bergbaumaschine, wobei die Steuerschaltung konfiguriert ist zum
- Zuweisen von Prioritäten an elektrische Leistungseinheiten einer Vielzahl von elektrischen Leistungseinheiten der Bergbaumaschine, wobei jede elektrische Leistungseinheit eine zugewiesene Priorität aufweist; und
- Steuern der Verteilung elektrischer Leistung für die Vielzahl von elektrischen Leistungseinheiten basierend auf den zugewiesenen Prioritäten;
**dadurch gekennzeichnet,**
**dass** die zugewiesenen Prioritäten in Prioritäten zum Laden der elektrischen Leistungseinheiten und Prioritäten zum Entladen der elektrischen Leistungseinheiten unterteilt sind, und
**dass** das Steuern der Verteilung elektrischer Leistung ferner auf einem maximalen Ladeleistungspegel und einem maximalen Entladeleistungspegel einer Gleichstrom- (DC-) Sammelschiene der Bergbaumaschine basiert, wobei die DC-Sammelschiene so konfiguriert ist, dass sie elektrische Leistung an eine oder mehrere Energiequellen der Bergbaumaschine und die Vielzahl der elektrischen Leistungseinheiten überträgt und von diesen empfängt, wobei das Steuern der Verteilung elektrischer Leistung ferner Folgendes umfasst:
- Bestimmung von Leistungsschätzungsfehlern für mindestens eine der Vielzahl von elektrischen Leistungseinheiten basierend auf der Rückkopplung der Verteilung elektrischer Leistung von einer oder mehreren Energiequellen der Bergbaumaschine, und
- Anpassung eines Lade- und/oder Entladeleistungspegels der mindestens einen der Vielzahl von elektrischen Leistungseinheiten basierend auf den bestimmen Leistungsschätzungsfehlern.

12. Steuerschaltung (240, 340) nach Anspruch 11, ferner umfassend einen Prozessor (242, 342) und einen Speicher (244, 344), wobei in dem Speicher ein Computerprogramm nach Anspruch 10 gespeichert ist, und wobei der Prozessor dazu konfiguriert ist, das Computerprogramm auszuführen.

13. Bergbaumaschine (300), umfassend:
- eine oder mehrere Energiequellen (310),
- eine Vielzahl von elektrischen Leistungseinheiten (320a, 320b, 320c), und
- eine Steuerschaltung (340) nach Anspruch 11, wobei die Bergbaumaschine so konfiguriert ist, dass sie elektrische Leistung an die eine oder die mehreren Energiequellen und die Vielzahl von elektrischen Leistungseinheiten überträgt und von diesen empfängt.

14. Bergbaumaschine nach Anspruch 13, ferner umfassend eine Maschinensteuereinheit (350), die so konfiguriert ist, dass sie ein oder mehrere elektrische Systeme und/oder Teilsysteme der Bergbaumaschine, einschließlich der Steuerschaltung (340), steuert.

## Revendications

1. Procédé de commande de puissance d'une machine d'exploitation minière, le procédé comprenant les étapes consistant à:
- attribuer (S10) des priorités à des unités d'alimentation électrique d'une pluralité d'unités d'alimentation électrique de la machine d'exploitation minière, chaque unité d'alimentation électrique ayant une priorité attribuée; et
- commander (S20) la distribution d'énergie électrique à la pluralité d'unités d'alimentation électrique, sur la base des priorités attribuées;
**caractérisé :**
**en ce que** les priorités attribuées sont réparties en priorités pour charger des unités d'alimentation électrique et des priorités pour décharger des unités d'alimentation électrique; et
**en ce que** l'étape de commande (S20) de distribution d'énergie électrique est fondée en outre sur un niveau de puissance de charge maximum et un niveau de puissance de décharge maximum d'un bus en courant continu, CC, de la machine d'exploitation minière, où le bus CC est configuré pour transmettre et recevoir de l'énergie électrique à/depuis une ou plusieurs sources d'énergie de la machine d'exploitation minière et la pluralité d'unités d'alimentation électrique, dans lequel l'étape de commande (S20) de distribution d'énergie électrique comprend en outre les étapes consistant à:
- déterminer (S22) des erreurs d'estimation de puissance pour au moins l'une de la pluralité d'unités d'alimentation électrique, sur la base de la rétroaction de distribution d'énergie électrique en provenance d'une ou plusieurs sources d'énergie de la machine d'exploitation minière, et
- ajuster (S24) un niveau de puissance de charge et/ou de décharge de l'au moins une de la pluralité d'unités d'alimentation électrique, sur la base des erreurs d'estimation de puissance déterminées.

2. Procédé selon la revendication 1, dans lequel une ou plusieurs sources d'énergie de la machine d'exploitation minière comprennent au moins l'un parmi une batterie rechargeable, un supercondensateur, une pile à combustible rechargeable et un volant d'inertie.

3. Procédé selon l'une quelconque des revendications précédentes, dans lequel l'étape de commande (S20) de distribution d'énergie électrique est fondée en outre sur des niveaux de puissance de charge maximum respectifs et des niveaux de puissance de décharge maximum respectifs de la pluralité d'unités d'alimentation électrique de la machine d'exploitation minière.

4. Procédé selon l'une quelconque des revendications précédentes, dans lequel le niveau de puissance de charge maximum et le niveau de puissance de décharge maximum d'une unité d'alimentation électrique sont fondés sur une puissance de charge restante de bus CC et/ou sur une puissance de décharge restante de bus CC, et sont fondés en outre sur une marge de puissance prédéterminée.

5. Procédé selon l'une quelconque des revendications précédentes, dans lequel l'étape de commande (S20) de la distribution d'énergie électrique est fondée en outre sur un niveau de tension d'un bus de courant continu, CC, de la machine d'exploitation minière,
dans lequel le bus CC est configuré pour transmettre et recevoir de l'énergie électrique à/depuis au moins l'un parmi une batterie rechargeable, un supercondensateur, une pile à combustible rechargeable et un volant d'inertie de la machine d'exploitation minière et la pluralité d'unités d'alimentation électrique.

6. Procédé selon l'une quelconque des revendications précédentes, dans lequel un ensemble d'unités d'alimentation électrique sont regroupées ensemble en une unité fonctionnelle et se voient attribuer une priorité unique pour l'unité fonctionnelle.

7. Procédé selon la revendication 6, dans lequel l'unité fonctionnelle d'unités d'alimentation électrique comprend un chargeur, un hacheur de courant de frein et un ralentisseur.

8. Procédé selon l'une quelconque des revendications précédentes, dans lequel l'étape de commande (S20) de distribution d'énergie électrique est fondée en outre sur la puissance mesurée produite et consommée dans chaque unité d'alimentation électrique.

9. Procédé selon l'une quelconque des revendications précédentes, dans lequel les puissances appelées de charge et de décharge d'énergie électrique de la pluralité d'unités d'alimentation électrique sont utilisées dans une boucle de rétroaction afin d'actualiser en continu les limites de charge et de décharge d'énergie électrique d'un bus en courant continu, CC, de la machine d'exploitation minière et/ou de la pluralité d'unités d'alimentation électrique.

10. Programme informatique de commande de puissance d'une machine d'exploitation minière, le programme informatique comprenant un code de programme informatique qui, lorsqu'il est exécuté, amène des circuits de commande d'une machine d'exploitation minière à mettre en œuvre le procédé selon l'une quelconque des revendications 1 à 9.

11. Circuits de commande (240, 340) destinés à la commande de puissance d'une machine d'exploitation minière, où les circuits de commande sont configurés pour:
- attribuer des priorités à des unités d'alimentation électrique d'une pluralité d'unités d'alimentation électrique de la machine d'exploitation minière, chaque unité d'alimentation électrique ayant une priorité attribuée ; et
- commander la distribution d'énergie électrique à la pluralité d'unités d'alimentation électrique sur la base des priorités attribuées ;
**caractérisés :**
**en ce que** les priorités attribuées sont réparties en priorités pour charger des unités d'alimentation électrique et des priorités pour décharger des unités d'alimentation électrique, et
**en ce que** la commande de distribution d'énergie électrique est fondée en outre sur un niveau de puissance de charge maximum et un niveau de puissance de décharge maximum d'un bus en courant continu, CC, de la machine d'exploitation minière, où le bus CC est configuré pour transmettre et recevoir de l'énergie électrique à/depuis une ou plusieurs sources d'énergie de la machine d'exploitation minière et la pluralité d'unités d'alimentation électrique, dans lequel la commande de distribution d'énergie électrique comprend:
- détermination des erreurs d'estimation de puissance pour au moins l'une de la pluralité d'unités d'alimentation électrique, sur la base de la rétroaction de distribution d'énergie électrique en provenance d'une ou plusieurs sources d'énergie de la machine d'exploitation minière, et
- ajustement un niveau de puissance de charge et/ou de décharge de l'au moins une de la pluralité d'unités d'alimentation électrique, sur la base des erreurs d'estimation de puissance déterminées.

12. Circuits de commande (240, 340) selon la revendication 11, comprenant en outre un processeur (242, 342) et une mémoire (244, 344), dans lesquels la mémoire stocke un programme informatique selon la revendication 10, et dans lesquels le processeur est configuré pour exécuter le programme informatique.

13. Machine d'exploitation minière (300), comprenant:
- une ou plusieurs sources d'énergie (310),
- une pluralité d'unités d'alimentation électrique (320a, 320b, 320c), et
- des circuits de commande (340) selon la revendication 11,
où la machine d'exploitation minière est configurée pour transmettre et recevoir de l'énergie électrique à/depuis les une ou plusieurs sources d'énergie et la pluralité d'unité d'alimentation électrique.

14. Machine d'exploitation minière selon la revendication 13, comprenant en outre une unité de commande de machine (350) configurée pour commander un ou plusieurs systèmes et/ou soussystèmes électriques de la machine d'exploitation minière, comprenant les circuits de commande (340).
